Europäisches Patentamt

European Patent Office

Office européen des brevets

(19)

(11) **EP 0 840 423 A2**

(12) **EUROPÄISCHE PATENTANMELDUNG**

(43) Veröffentlichungstag:
06.05.1998 Patentblatt 1998/19

(51) Int. Cl.⁶: **H02J 3/00**

(21) Anmeldenummer: 97118601.0

(22) Anmeldetag: 25.10.1997

(84) Benannte Vertragsstaaten:
AT BE CH DE DK ES FI FR GB GR IE IT LI LU MC NL PT SE

(30) Priorität: 30.10.1996 DE 19645001

(71) Anmelder: ABB Research Ltd.
8050 Zürich (CH)

(72) Erfinder:
• Böhme, Helmut, Prof. Dr.
69226 Nussloch (DE)

• Smailus, Bernd
69502 Hemsbach (DE)
• Fitterer, Gerd
68229 Mannheim (DE)
• Paschen, Rolf, Prof. Dr.
76669 Bad Schönborn (DE)

(74) Vertreter:
Rupprecht, Klaus, Dipl.-Ing. et al
c/o ABB Patent GmbH,
Postfach 10 03 51
68128 Mannheim (DE)

(54) **Freileitung zur Elektroenergieübertragung**

(57) Es wird eine Freileitung zur Elektroenergieübertragung mit einer zusätzlichen, mindestens einen Phasenleiter umschließenden Kompensationsschleife vorgeschlagen, wobei in diese Kompensationsschleife (1) mittels einer treibenden Spannung ein Kompensationsstrom ($I_{komp}$) eingespeist wird, dessen Phasenlage und Amplitude derart bezüglich der Phasenlage und der Amplitude des im Phasenleiter (L1, L2, L3) fließenden Phasenstromes ($i_R$, $i_S$, $i_T$) eingestellt ist, daß der hierdurch erzeugte Magnetfluß dem vom Phasenstrom erzeugten Magnetfluß entgegenwirkt. Vorzugsweise wird die treibende Spannung mittels einer Zusatzschleife (2) erzeugt, welche mindestens einen Phasenleiter (L1, L2, L3) umschließt und mit der Kompensationsschleife (1) verbunden ist, so daß die Freileitung in mindestens zwei Hauptabschnitte unterteilt ist, nämlich in einen Abschnitt mit Kompensationsschleife (1) und in mindestens einen Abschnitt mit Zusatzschleife (2).

Fig.3

EP 0 840 423 A2

**Beschreibung**

Die Erfindung bezieht sich auf eine Freileitung zur Elektroenergieübertragung gemäß dem Oberbegriff des Anspruch 1.

In der Umgebung von Freileitungen wird - bedingt durch die Übertragungsströme - unvermeidlich ein Magnetfeld erzeugt. Es ist unter anderem durch den Effektivwert seiner magnetischen Induktion gekennzeichnet.

Um schädliche Wechselwirkungen dieses Magnetfeldes mit der menschlichen Gesundheit zu vermeiden, sollte es an Orten, die nicht nur zum vorübergehenden Aufenthalt von Menschen bestimmt sind, möglichst niedrig sein und darf in Empfehlungen vereinbarte und/oder festgesetzte gesetzliche Grenzwerte keinesfalls überschreiten.

Der Erfindung liegt die Aufgabe zugrunde, eine Freileitung zur Elektroenergieübertragung anzugeben, die in ausgewählten Abschnitten der Leitung und insbesondere im Bereich unterhalb der Leiter und in der Nähe der Erdoberkante, vorzugsweise bis zu einer Höhe von 2 bis 3 m über der Oberfläche, ein wesentlich reduziertes Magnetfeld erzeugt.

Diese Aufgabe wird in Verbindung mit den Merkmalen des Oberbegriffes erfindungsgemäß durch die im Kennzeichen des Anspruchs 1 angegebenen Merkmale gelöst. Dabei entsprechen die ersten Leiter von Kompensationsschleife und Zusatzschleife den oberen Leitern bei vertikaler Phasenleiter-Anordnung bzw. den linken Leitern bei horizontaler Phasenleiter-Anordnung. Die zweiten Leiter von Kompensationsschleife und Zusatzschleife entsprechen den unteren Leitern bei vertikaler Phasenleiter-Anordnung bzw. den rechten Leitern bei horizontaler Phasenleiter-Anordnung.

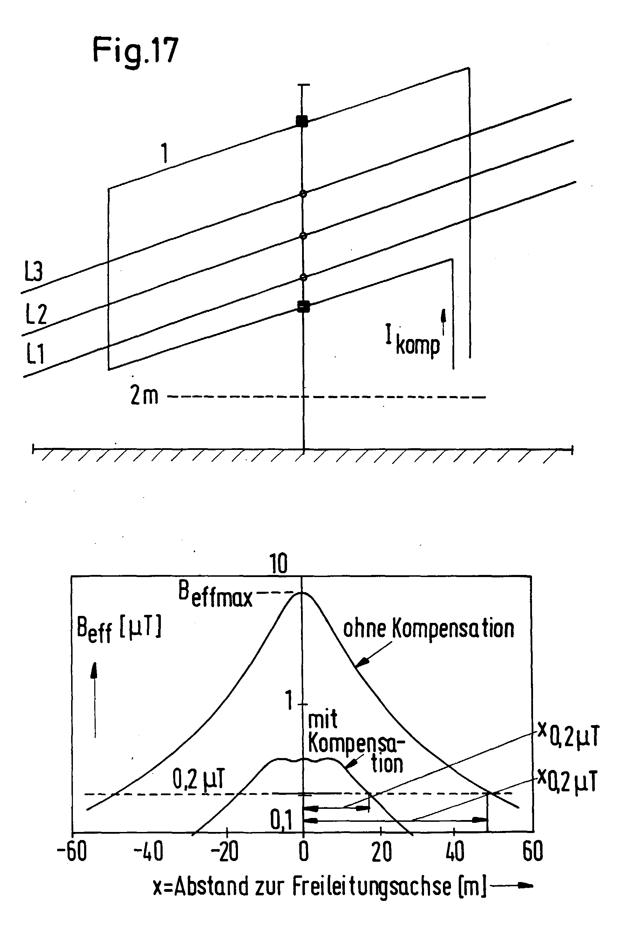

Die mit der Erfindung erzielbaren Vorteile bestehen insbesondere darin, daß sowohl das Maximum des Effektivwertes der magnetischen Induktion $B_{effmax}$ im Bereich bis 2 bis 3 m Höhe über dem Erdboden als auch der Abstand $x_{0,2\ \mu T}$ zu der Freileitungsachse, bei dem der Effektivwert der magnetischen Induktion in 2 m Höhe über der Erdoberkante den Wert von 0,2 $\mu$T erreicht und für größere Abstände unterschreitet, extrem reduziert werden (siehe hierzu auch Fig. 17). Die Magnetfelder in diesem Bereich 2 bis 3 m oberhalb der Erdoberkante können bis auf weniger als 10% im Vergleich zur unkompensierten, herkömmlichen Freileitung reduziert werden. Dies hat seine Ursache darin, daß Kompensationsschleife (insbesondere Phase und Amplitude des Kompensationsstromes) und Freileitung hinsichtlich der magnetischen Kopplung aufeinander abgestimmt sind, d. h. Kompensationsschleife, Zusatzschleife und Freileitung werden als geometrische und elektrische Einheit betrachtet.

Da die Leiter der Kompensationsschleife nahezu auf Erdpotential liegen (ein Punkt der Kompensationsschleife ist geerdet), wirkt der obere Leiter einer Freileitung mit direkt übereinander angeordneten Leitern vorteilhaft zusätzlich wie ein Erdseil für den Blitzschutz. Der untere geerdete Leiter wirkt vorteilhaft zusätzlich als Schirm für das elektrische Feld und reduziert dieses oberhalb der Erdoberkante.

Die Erfindung wird nachstehend an Hand der in der Zeichnung dargestellten Ausführungsformen erläutert. Es zeigen:

Fig. 1    die Grundanordnung einer magnetfeldreduzierten Freileitung,

Fig. 2    eine perspektivische Ansicht der Grundanordnung,

Fig. 3-7    Varianten der Grundanordnung mit Kompensationsschleife und Zusatzschleife,

Fig. 8    die prinzipielle Phasenlage der Kompensationsströme im unteren Leiter der Kompensationsschleife bei den möglichen Phasenfolgen der Leiterströme und übereinander bzw. nebeneinander angeordneten Leitern,

Fig. 9    die Bildung einer geeigneten treibenden Spannung durch Addition von Kompensationsspannung und Zusatzspannung (gültig für die Varianten gemäß den Fig. 3, 4 und verschiedene Phasenfolgen),

Fig. 10    die Bildung einer geeigneten treibenden Spannung durch Subtraktion von Kompensationsspannung und Zusatzspannung (gültig für die Varianten gemäß den Fig. 5, 6, 7 und verschiedene Phasenfolgen),

Fig. 11    die mögliche Lage einer Kompensationsschleife bei nebeneinander angeordneten Phasenleitern,

Fig. 12-16    weitere Varianten mit Kompensationsschleife und Zusatzschleifen,

Fig. 17    die Abhängigkeit der magnetischen Induktion unterhalb einer Freileitung vom Abstand zur Leitungsachse.

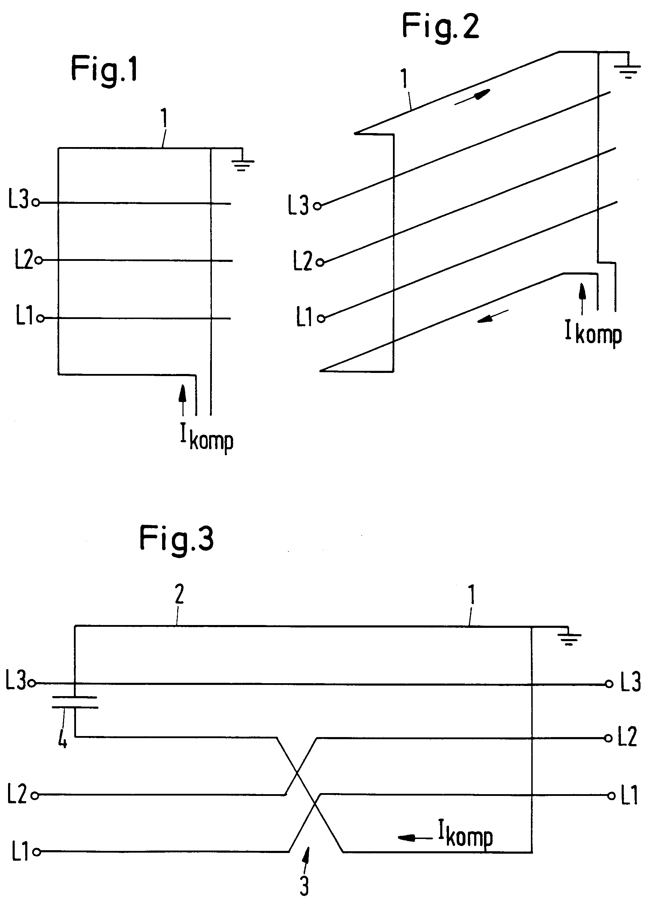

In Fig. 1 ist die Grundanordnung einer magnetfeldreduzierten Freileitung dargestellt. Es sind drei übereinander angeordnete Phasenleiter L1, L2, L3 eines Drehstromsystems (mit drei je 120° phasenverschobenen Strömen, wobei Phasenwinkel $\varphi$(iR) = 0°, Phasenwinkel $\varphi$(iS) = -120°, Phasenwinkel $\varphi$(iT) = -240°) zu erkennen, wobei die drei Phasenleiter von einer offenen Kompensationsschleife 1 umschlossen werden. Der obere Leiter (nachfolgend auch als erster Leiter bezeichnet) der Kompensationsschleife 1 verläuft oberhalb des oberen Phasenleiters L3 und der untere Leiter (nachfolgend auch als zweiter Leiter bezeichnet) der Kompensationsschleife 1 verläuft unterhalb des unteren Phasenleiters L1. Über seitliche, vertikale Verbindungsleiter werden oberer und unterer Leiter respektive erster und zweiter Leiter der Kompensationsschleife miteinander verbunden.

In Fig. 2 ist eine perspektivische Ansicht der Grundanordnung dargestellt. Es ist insbesondere zu erkennen, daß der obere Leiter der Kompensationsschleife, die drei Phasenleiter L1, L2, L3 und der untere Leiter der Kompensationsschleife 1 direkt untereinander angeordnet sind, während die Verbindungsleiter seitlich davon verlaufen.

Zur Reduktion des unterhalb der Freileitung im Bereich der Erdoberfläche auftretenden Magnetfelds wird ein Kompensationsstrom $I_{komp}$ in die Kompensationsschleife 1 einge speist. Das durch diesen Kompensationsstrom erzeugte Magnetfeld überlagert das von den Phasenleitern erzeugte Magnetfeld derart kompensierend, daß das Magnetfeld zwischen der Erdoberfläche und einer Höhe von 2 bis 3 m sehr stark reduziert ist. Die erforderliche Phasenlage des Kompensationsstromes $I_{komp}$ ist davon abhängig, welche der möglichen Phasenfolgen konkret vorliegt. Prinzipiell sind bei einem Drehstromsystem sechs verschiedene Phasenfolgen einsetzbar, nämlich L1 = R, L2 = S, L3 = T (kurz mit R S T bezeichnet) oder L1 = R, L2 = T, L3 = S (kurz mit R T S bezeichnet) oder L1 = T, L2 = R, L3 = S (kurz mit T R S bezeichnet) oder L1 = T, L2 = S, L3 = R (kurz mit T S R bezeichnet) oder L1 = S, L2 = T, L3 = R (kurz mit S T R bezeichnet) oder L1 = S, L2 = R, L3 = T (kurz mit S R T bezeichnet).

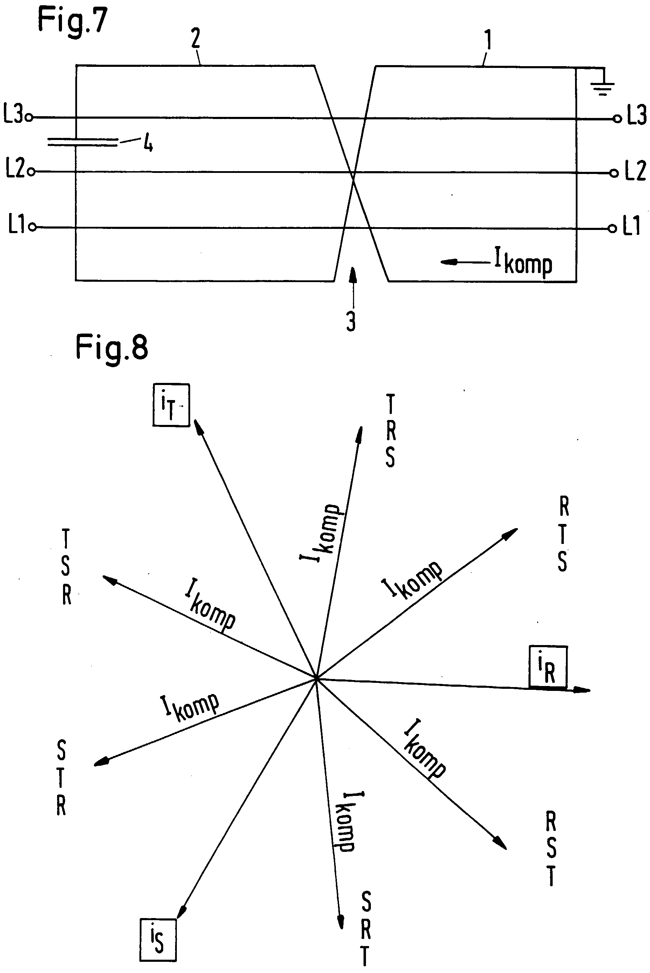

Fig. 8 zeigt zur Darstellung der Phasenlage die prinzipielle erforderliche Lage der Zeiger der Kompensationsströme $I_{komp}$ für maximale Reduktion des Magnetfeldes bei den vorstehend bezeichneten möglichen Phasenfolgen. Die Lage der Zeiger der Phasenströme $i_R$, $i_S$, $i_T$ ist gekennzeichnet. Wie zu erkennen ist, sind die für eine optimale Magnetfeldreduktion erforderlichen Phasenlagen der Kompensationsströme $I_{komp}$ ungefähr in Gegenphase zur jeweils untersten, d. h. der Erdoberfläche am nähesten liegenden Phase. Diese erforderlichen Phasenlagen der Kompensationsströme $I_{komp}$ sowie die erforderlichen Amplituden sind unter Beachtung der Wirk- und Blindwiderstände der Strombahn und der konkret vorliegenden Anordnung (Geometrie) der Phasenleiter und der Kompensationsschleife sowie der Amplituden der Phasenströme $i_R$, $i_S$, $i_T$ berechenbar.

Bei richtiger Phasenlage und Amplitude des in die Kompensationsschleife 1 eingespeisten Kompensationsstromes $i_{komp}$ ergibt sich eine sehr starke Reduktion des Effektivwertes der Induktion, so daß $B_{effmax}$ und $x_{0,2\ \mu T}$ wie gewünscht sehr stark verkleinert werden. Beispielsweise beträgt die Stromstärke des Kompensationsstromes ungefähr 40% vom Phasenstrom.

Bei der Grundanordnung gemäß Fig. 1/2 ist es aufwendig, daß der Kompensationsstrom $I_{komp}$ von einer Fremdspannungsquelle aktiv in die Kompensationsschleife 1 eingespeist werden muß. Deshalb werden in den Fig. 3-7 sowie 12 bis 16 Varianten der Grundanordnung mit Kompensationsschleifen und Zusatzschleifen gezeigt, welche diesen Nachteil nicht mehr aufweisen und passiv hinsichtlich der Erzeugung der für den Kompensationsstrom erforderlichen treibenden Spannung sind. Bei allen Varianten wird die zur Erzeugung des Kompensationsstromes $I_{komp}$ erforderliche treibende Spannung durch das Drehstromsystem selbst erzeugt.

Hierzu ist die Freileitung horizontal in mindestens zwei Hauptabschnitte unterteilt, in mindestens einen ersten Hauptabschnitt mit der Kompensationsschleife 1 und in mindestens einen zweiten Hauptabschnitt mit einer Zusatzschleife 2, welche mit der Kompensationsschleife 1 verbunden ist. Im ersten Hauptabschnitt mit der Kompensationsschleife werden vorteilhaft $B_{effmax}$ und $x_{0,2\ \mu T}$ sehr stark reduziert, während diese das Magnetfeld kennzeichnenden Größen im zweiten Hauptabschnitt mit der Zusatzschleife aufgrund des Einsatzes der Zusatzschleife geringfügig erhöht werden. Dies ist bei der Projektierung der Freileitung und insbesondere bei der Wahl der Länge und Lage der Kompensationsschleife und Zusatzschleife zu beachten. Selbstverständlich ist es auch möglich, die Freileitung in drei, vier oder mehr Abschnitte mit mehreren Zusatzschleifen und/oder mehreren Kompensationsschleifen zu unterteilen. Wichtig ist dabei das Wissen, in welchen Abschnitten eine extreme Reduktion des Magnetfeldes erforderlich ist und in welchen Abschnitten dies nicht notwendig ist.

Der in der Zusatzschleife angeordnete Reihenkondensator 4 kompensiert den induktiven Spannungsabfall in der Zusatzschleife und bewirkt eine gewünschte Phasendrehung des Kompensationsstromes in die erforderliche Phasenlage. Die Amplitude der in der Zusatzschleife induzierten Leerlaufspannung $U_{zus}$ ist von der Länge der Zusatzschleife abhängig.

Bei der Variante gemäß Fig. 3 umschließt die Zusatzschleife 2 lediglich den oberen Phasenleiter L3. Es ergibt sich eine Kreuzung 3, bei der die Verbindung zwischen dem unteren Leiter der Zusatzschleife 2 (nachfolgend auch als zweiter Leiter der Zusatzschleife bezeichnet) und dem unteren Leiter der Kompensationsschleife 1 die beiden unteren Phasenleiter L1, L2 kreuzt. Im zweiten Hauptabschnitt mit der Zusatzschleife 2 ergibt sich eine vertikale Anordnung des Leitersystems von oben nach unten wie folgt: oberer Leiter der Zusatzschleife - L3 - unterer Leiter der Zusatzschleife - L2 - L1. Im ersten Hauptabschnitt mit der Kompensationsschleife 1 ergibt sich die bereits aus der Grundanordnung bekannte vertikale Anordnung oberer Leiter der Kompensationsschleife - L3 - L2 - L1 - unterer Leiter der Kompensationsschleife.

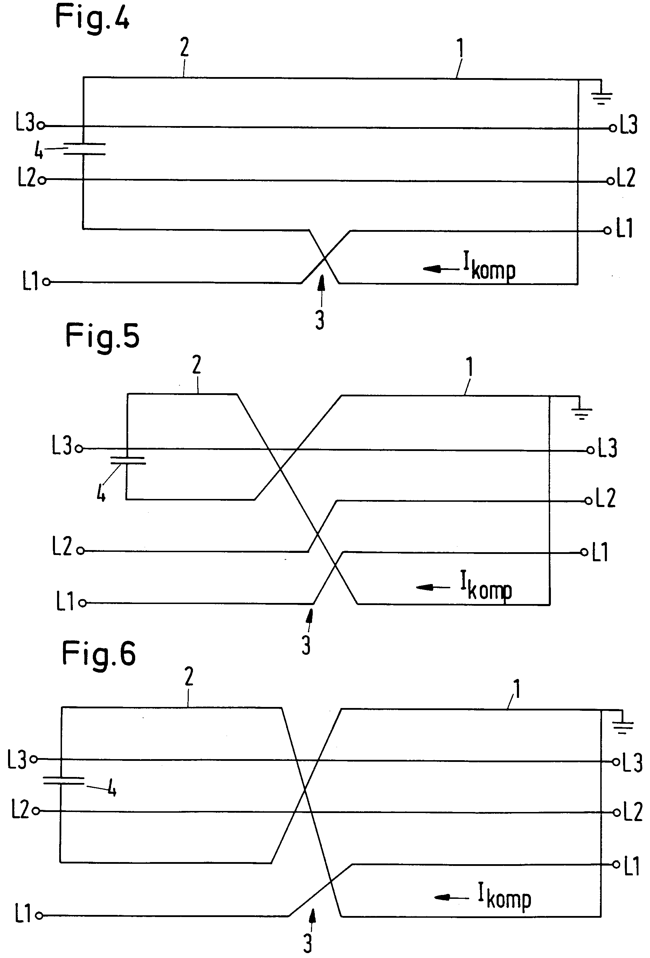

Bei der Variante gemäß Fig. 4 umschließt die Zusatzschleife 2 die beiden oberen Phasenleiter L2, L3. Es ergibt sich eine Kreuzung 3, bei der die Verbindung zwischen dem unteren Leiter der Zusatzschleife 2 und dem unteren Leiter der Kompensationsschleife 1 den unteren Phasenleiter L1 kreuzt. Im zweiten Hauptabschnitt (Zusatzschleife) ergibt sich eine vertikale Anordnung von oben nach unten wie folgt: oberer Leiter der Zusatzschleife - L3 - L2- unterer Leiter der Zusatzschleife - L1. Im ersten Hauptabschnitt (Kompensationsschleife) ergibt sich die bereits aus der Grundanordnung bekannte vertikale Anordnung oberer Leiter der Kompensationsschleife - L3 - L2 - L1 - unterer Leiter der Kompensationsschleife.

Durch die Verbindung von Kompensationsschleife 1 und Zusatzschleife 2 nach den Fig. 3 und 4 werden die in den beiden Schleifen induzierten Spannungen addiert.

Bei der Variante gemäß Fig. 5 umfaßt die Zusatzschleife 2 lediglich den oberen Phasenleiter L3. Es ergibt sich eine Kreuzung 3, bei der die Verbindungen zwischen dem unteren Leiter der Zusatzschleife 2 und dem oberen Leiter der Kompensationsschleife 1 den oberen Phasenleiter L3 kreuzt. Gleichermaßen kreuzt die Verbindung des oberen Leiters der Zusatzschleife 2 (nachfolgend auch als erster Leiter der Zusatzschleife bezeichnet) mit dem unteren Leiter der Kompensationsschleife 1 die beiden unteren Phasenleiter L1, L2. Im zweiten Hauptabschnitt ergibt sich eine vertikale Anordnung von oben nach unten wie folgt: oberer Leiter der Zusatzschleife - L3 - unterer Leiter der Zusatzschleife - L2 - L1. Im ersten Hauptabschnitt ergibt sich die bereits aus der Grundanordnung bekannte vertikale Anordnung oberer Leiter der Kompensationsschleife - L3 - L2 - L1 - unterer Leiter der Kompensationsschleife.

Bei der Variante gemäß Fig. 6 umschließt die Zusatzschleife 2 die beiden oberen Phasenleiter L2, L3. Es ergibt sich eine Kreuzung 3, bei der die Verbindungen zwischen dem unteren Leiter der Zusatzschleife 2 und dem oberen Leiter der Kompensationsschleife 1 die beiden oberen Phasenleiter L2, L3 kreuzt. Gleichermaßen kreuzt die Verbindung des oberen Leiters der Zusatzschleife 2 mit dem unteren Leiter der Kompensationsschleife 1 alle drei Phasenleiter L1, L2, L3. Im zweiten Hauptabschnitt (Zusatzschleife) ergibt sich eine vertikale Anordnung von oben nach unten wie folgt: oberer Leiter der Zusatzschleife - L3 - L2 - unterer Leiter der Zusatzschleife - L1. Im ersten Hauptabschnitt (Kompensationsschleife) ergibt sich die bereits aus der Grundanordnung bekannte vertikale Anordnung oberer Leiter der Kompensations-Schleife - L3 - L2 - L1 - unterer Leiter der Kompensationsschleife.

Bei der Variante gemäß Fig. 7 umschließt die Zusatzschleife 2 alle drei Phasenleiter L1, L2, L3. Es ergibt sich eine Kreuzung 3, bei der die Verbindungen zwischen dem unteren Leiter der Zusatzschleife 2 und dem oberen Leiter der Kompensationsschleife 1 alle drei Phasenleiter L1, L2, L3 kreuzt. Gleichermaßen kreuzt die Verbindung des oberen Leiters der Zusatzschleife 2 mit dem unteren Leiter der Kompensationsschleife 1 alle drei Phasenleiter L1, L2, L3. Im zweiten Hauptabschnitt ergibt sich eine vertikale Anordnung von oben nach unten wie folgt: oberer Leiter der Zusatzschleife - L3 - L2 - L1 - unterer Leiter der Zusatzschleife. Im ersten Hauptabschnitt (Kompensationsschleife) ergibt sich die bereits aus der Grundanordnung bekannte vertikale Anordnung oberer Leiter der Kompensationsschleife - L3 - L2 - L1 - unterer Leiter der Kompensationsschleife.

Durch die Verbindung von Kompensationsschleife 1 und Zusatzschleife 2 nach den Fig. 5 bis 7 werden die in den beiden Schleifen induzierten Spannungen subtrahiert.

Die in Fig. 8 dargestellte und bereits vorstehend für die Grundanordnung behandelte prinzipielle Lage der Kompensationsströme bei den möglichen Phasenfolgen ist gleichermaßen bei den Varianten gemäß den Fig. 3-7 gültig.

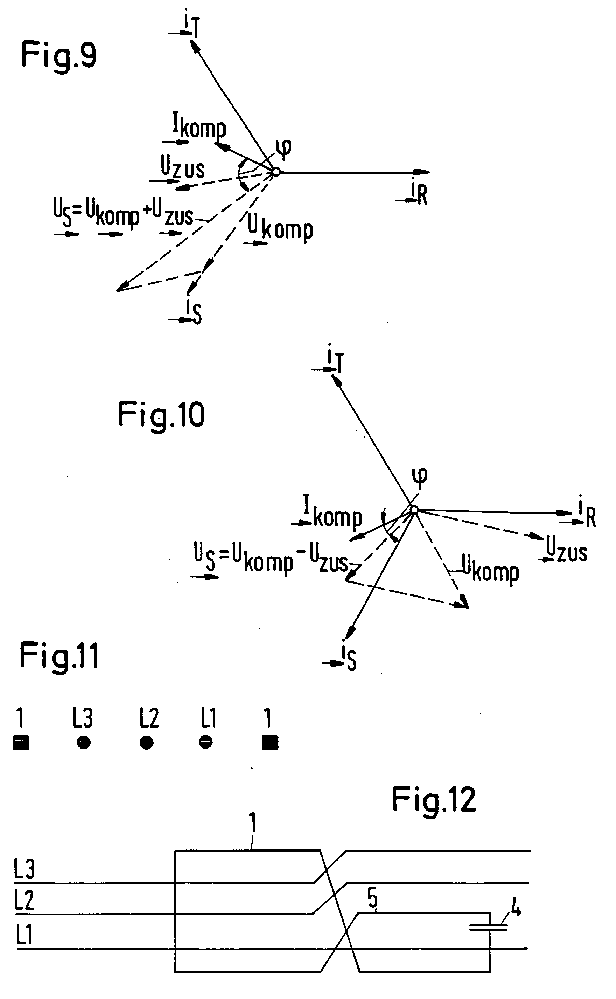

Für eine optimale Magnetfeldreduktion muß der Phasenwinkel $\varphi$ zwischen dem erforderlichen Kompensationsstrom $I_{komp}$ und der induzierten Spannung $U_S$ in der zusammengeschalteten Kompensations- und Zusatzschleife kleiner als 90° sein, damit mittels kapazitiver Reihenkompensation die erforderliche Phasenlage des Kompensationsstromes eingestellt werden kann. Wie dies bei den einzelnen Phasenfolgen unter Verwendung der vorstehend beschriebenen Varianten zu erzielen ist, wird in den nachfolgenden Fig. 9 und 10 behandelt. Allgemein wird in der Zusatzschleife eine solche Spannung induziert, daß die Überlagerung beider Spannungen (in Zusatzschleife und in Kompensationsschleife) die vorstehend angegebene Phasenbedingung erfüllt.

In Fig. 9 ist beispielhaft die Bildung einer geeigneten treibenden Spannung (= Summenspannung $U_S$) durch Addition von Kompensationsspannung (= Leerlaufspannung $U_{komp}$) und Zusatzspannung (= Leerlaufspannung $U_{zus}$) dargestellt. Die Spannungsaddition ist für die Phasenfolgen L3 = T, L2 = S, L1 = R (kurz T S R) oder L3 = R, L2 = T, L1 = S (kurz R T S) oder L3 = S, L2 = R, L1 = T (kurz S R T) erforderlich, bei denen der Phasenwinkel $\varphi$ zwischen $I_{komp}$ und $U_S$ kleiner als 90° ist (siehe beispielsweise Fig. 3 mit L1 = R, L2 = S, L3 = T). Es sind die notwendige Phasenlage des Kompensationsstromes $I_{komp}$, die in der Kompensationsschleife 1 induzierte Leerlaufspannung $U_{komp}$, der Phasenwinkel $\varphi$ und die in der Zusatzschleife induzierte Leerlaufspannung $U_{zus}$ zu erkennen. Wie ersichtlich ist, wird durch vektorielle Addition der Leerlaufspannungen $U_{zus} + U_{komp}$ eine Summenspannung $U_S$ erzeugt, welche in Richtung zur gewünschten Phasenlage des Kompensationsstromes $I_{komp}$ so gedreht wird, daß der Phasenwinkel $\varphi$ zwischen $I_{komp}$ und $U_S$ kleiner als 90° ist. Die vorstehend genannten drei Phasenfolgen sind demnach mit einer der Varianten gemäß den Fig. 3 oder 4 zu betreiben, bei denen eine Spannungsaddition bewirkt wird.

In Fig. 10 ist beispielhaft die Bildung einer geeigneten treibenden Spannung (= Summenspannung $U_S$) durch Subtraktion von Kompensationsspannung (= Leerlaufspannung $U_{komp}$) und Zusatzspannung (= Leerlaufspannung $U_{zus}$) dargestellt. Die Spannungssubtraktion ist für die Phasenfolgen L3 = S, L2 = T, L1 = R (kurz S T R) oder L3 = T, L2 = R, L1 = S (kurz T R S) oder L3 = R, L2 = S, L1 = T (kurz R S T) erforderlich, um einen Phasenwinkel $\varphi$ zwischen $I_{komp}$

und $U_S$ kleiner als 90° zu erzielen (siehe beispielsweise Fig. 5 mit L1 = R, L2 = T, L3 = S). Es sind die notwendige Phasenlage des Kompensationsstromes $I_{komp}$, die in der Kompensationsschleife 1 induzierte Leerlaufspannung $U_{komp}$, die in der Zusatzspannung induzierte Leerlaufspannung $U_{zus}$, die Spannung $U_S$ der zusammengeschalteten Schleifen und der Phasenwinkel φ zu erkennen. Wie ersichtlich ist, wird durch vektorielle Subtraktion von $U_{komp}$ - $U_{zus}$ eine Differenzspannung erzeugt, welche in Richtung zur gewünschten Phasenlage des Kompensationsstromes $I_{komp}$ gedreht wird. Die vorstehend genannten drei Phasenfolgen sind demnach mit einer der Varianten gemäß den Fig. 5 bis 7 zu betreiben, bei denen durch zusätzliche Kreuzung der Leiter von Kompensationsschleife 1 und Zusatzschleife 2 eine Spannungssubtraktion bewirkt wird.

Allgemein gilt für alle vorstehend behandelten Varianten, daß die in der Zusatzspannung induzierte Leerlaufspannung am größten ist, wenn die Zusatzschleife nur einen Phasenleiter umschließt, wie dies in den Fig. 3 und 5 der Fall ist. Umschließt die Zusatzschleife alle drei Phasenleiter, wie in Fig. 7, ist die in der Zusatzspannung induzierte Leerlaufspannung am kleinsten.

Nachdem je nach Phasenfolge die Summenspannung $U_S = U_{komp} + U_{zus}$ oder die Summenspannung $U_S = U_{komp} - U_{zus}$ bestimmt ist, können die erforderliche Länge der Zusatzschleife 2, die erforderliche Kapazität des Reihenkondensators 4 und der geeignete Widerstand der Zusatzschleife 2 aus der notwendigen Höhe und Phasenlage des Kompensationsstromes ermittelt werden. Aus der erforderlichen Länge der Zusatzschleife und dem geeigneten Widerstand ergibt sich die notwendige Seilstärke der Zusatzschleife 2 und Kompensationsschleife 1. Zweckmäßig wird die Länge der Zusatzschleife ein ganzzahliges Vielfaches der Länge der Kompensationsschleife betragen, um die erforderlichen Leiterverbindungen und Leiterkreuzungen an den Masten der Freileitung auszuführen.

Die vorstehenden Betrachtungen beziehen sich beispielhaft auf das Ausführungsbeispiel mit drei vertikal untereinander angeordneten Phasenleitern, da bei dieser Phasenleiter-Anordnung die größte Magnetfeldreduktion erzielt wird. Die erfinderische Idee läßt sich jedoch auch bei horizontal nebeneinander angeordneten Phasenleitern realisieren. In Fig. 11 ist die entsprechenden Anordnung skizziert. Die Lage der Kompensationsschleifen 1 ist angedeutet. Die in den Figuren 3 bis 7 für vertikale Leiteranordnungen dargestellten Seitenansichten sind somit gleichzeitig Draufsichten bei horizontalen Lei teranordnungen. Die Wirkung der erfindungsgemäß vorgeschlagenen Maßnahmen ist jedoch - wie bereits angedeutet - bei horizontal nebeneinander angeordneten Phasenleitern nicht so groß wie bei vertikal untereinander angeordneten Phasenleitern. Dies ist darin begründet, daß bei vertikal untereinander angeordneten Phasenleitern das Magnetfeld unterhalb der Freileitung linear polarisiert ist, was die Kompensation begünstigt.

Die Angabe von Phasenfolgen kann weitgehend entfallen, wenn die Phasenlage des Phasenstromes des mittleren Phasenleiters als Bezugsphase eingeführt wird. Ist der Phasenstrom in einem Außenleiter nacheilend, wird die Zusatzschleife, die diesen Leiter umfaßt, ohne Kreuzung angeschlossen (Addition der Spannungen). Ein Beispiel hierfür ist Fig. 3 mit Phasenstrom in L1 = voreilend, Phasenstrom in L2 = Bezugsphase, Phasenstrom in L3 = nacheilend.

Die Zusatzschleife, die den Leiter mit dem voreilenden Phasenstrom umfaßt, ist verkreuzt mit der Kompensationsschleife zusammenzuschalten (Subtraktion der Spannungen). Ein Beispiel hierfür ist Fig. 12 mit Phasenstrom in L1 = voreilend, Phasenstrom in L2 = Bezugsphase, Phasenstrom in L3 = nacheilend. Die Zusatzschleife ist mit Ziffer 5 bezeichnet.

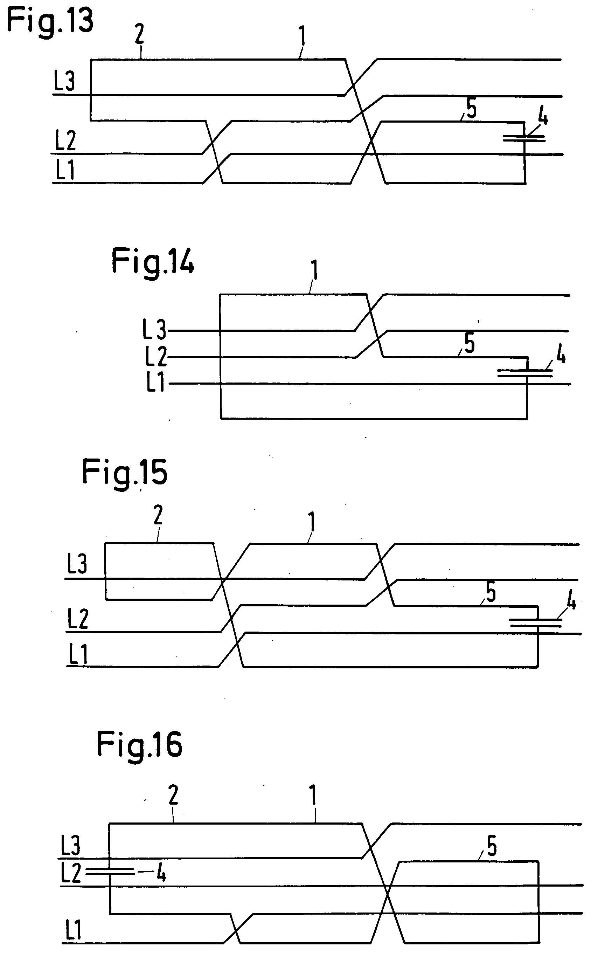

Selbstverständlich ist es möglich, sowohl Zusatzschleife 2 gemäß Fig. 3 als auch zusatzschleife 5 gemäß Fig. 12 gemeinsam mit der Kompensationsschleife 1 zu verbinden, wodurch die in Fig. 13 dargestellte Anordnung mit zwei Zusatzschleifen 2, 5 und einer Kompensationsschleife 1 gebildet wird, mit Phasenstrom in L1 = voreilend, Phasenstrom in L2 = Bezugsphase, Phasenstrom in L3 = nacheilend.

Bei vertikalen Leiteranordnungen ist es aus Gründen des Blitzschutzes oft wichtig, daß der oberste Leiter nahezu auf Erdpotential liegt. Dies ist vorteilhaft für jede Phasenfolge möglich. Hierzu lassen sich folgende Regeln aufstellen: Ist der Phasenstrom des oberen Leiters nacheilend, so ist die Anordnung der Zusatzschleife ohne Kreuzung gemäß Fig. 3 zu wählen, ist der Phasenstrom des oberen Leiters voreilend, so ist die Zusatzschleife verkreuzt gemäß Fig. 5 an die Kompensationsschleife anzuschalten.

Bei vertikalen Leiteranordnungen kann es empfehlenswert sein, den untersten Leiter nahezu auf Erdpotential zu legen, um das elektrische Feld über der Erdoberkante zu reduzieren. Auch dies ist vorteilhaft für jede Phasenfolge möglich. Hierzu lassen sich folgende Regeln aufstellen: Ist der Phasenstrom des unteren Leiters voreilend, so ist die Anordnung der Zusatzschleife gemäß Fig. 12 zu wählen, ist der Phasenstrom des unteren Leiters nacheilend, so ist die Zusatzschleife gemäß Fig. 14 an die Kompensationsschleife anzuschalten, wobei Phasenstrom in L1 = nacheilend, Phasenstrom in L2 = Bezugsphase, Phasenstrom in L3 = voreilend.

Selbstverständlich ist es möglich, sowohl Zusatzschleife 2 gemäß Fig. 5 als auch Zusatzschleife 5 gemäß Fig. 14 mit der Kompensationsschleife zu verbinden, wodurch die in Fig. 15 dargestellte Anordnung mit zwei Zusatzschleifen 2, 5 und einer Kompensationsschleife gebildet wird, mit Phasenstrom in L1 = nacheilend, Phasenstrom in L2 = Bezugsphase, Phasenstrom in L3 = voreilend.

In Fig. 16 ist gezeigt, daß auch Anordnungen mit zwei an eine Kompensationsschleife 1 geschaltete Zusatzschleifen 2, 5 gebildet werden können, bei denen jede Zusatzschleife zwei Leiter umfaßt, mit Phasenstrom in L1 = voreilend, Phasenstrom in L2 = Bezugsphase, Phasenstrom in L3 = nacheilend.

In Fig. 17 ist beispielhaft die Abhängigkeit der magnetischen Induktion unterhalb einer Freileitung vom Abstand zur Leitungsachse gezeigt, und zwar beispielhaft für eine Höhe von 2 m über der Erdoberfläche (Magnetfeldprofil mit und ohne Kompensation). Beim Punkt x = 0 m verläuft die senkrecht auf der Erdoberfläche stehende Leitungsachse der Freileitung. Der Effektivwert der Induktion $B_{eff}$ weist ohne Kompensation bei x = 0 m sein Maximum $B_{effmax}$ von ungefähr 10 μT auf und verringert sich zu beiden Seiten von x = 0 m aus. Bei den Abständen x = +47 m und x = -47 m zur Leitungsachse erreicht $B_{eff}$ den das Magnetfeld kennzeichnenden Wert 0,2 μT, d. h. der Wert $x_{0,2\ μT}$ beträgt 47 m. Mit Kompensation ist der Wert $x_{0,2\ μT}$ vorteilhaft auf ungefähr 17 m reduziert.

Abschließend werden die zur richtigen Gestaltung der magnetfeldreduzierten Freileitung erforderlichen Schritte nochmals zusammengefaßt: In einem ersten Schritt wird bei vorgegebener Leiteranordnung der notwendige Kompensationsstrom nach Betrag und Phase bestimmt. In einem zweiten Schritt wird die Anordnung der Zusatzschleife bzw. der Zusatzschleifen festgelegt. In einem dritten Schritt wird die Leerlaufspannung in den zusammengeschalteten Schleifen nach Betrag und Phase bestimmt. In einem vierten Schritt wird die Induktivität der zusammengeschalteten Schleifen - gegebenenfalls unter Beachtung der Gegeninduktivität zur Drehstromanordnung - bestimmt. In einem fünften Schritt werden aus der Amplitude/Phasenlage von Leerlaufspannung und Kompensationsstrom sowie der Induktivität der zusammengeschalteten Schleifen die erforderliche Kapazität des Reihenkondensators und der erforderliche ohmsche Widerstand der zusammengeschalteten Schleifen bestimmt. Bei Festlegung des notwendigen Leiterquerschnittes an Hand des ohmschen Widerstandes ist gegebenenfalls der Einfluß des Skin-Effektes zu beachten.

**Patentansprüche**

1. Freileitung zur Elektroenergieübertragung mit einer zusätzlichen, mindestens einen Phasenleiter umschließenden Schleife, dadurch gekennzeichnet, daß in diese Kompensationsschleife (1) mittels einer treibenden Spannung ein Kompensationsstrom ($I_{komp}$) eingespeist wird, dessen Phasenlage und Amplitude derart bezüglich der Phasenlage und der Amplitude des im Phasenleiter (L1, L2, L3) fließenden Phasenstromes ($i_R$, $i_S$, $i_T$) eingestellt ist, daß der hierdurch erzeugte Magnetfluß dem vom Phasenstrom erzeugten Magnetfluß entgegenwirkt, wobei die treibende Spannung für den Kompensationsstrom in der Kompensationsschleife und in mindestens einer Zusatzschleife (2, 5) erzeugt wird, welche mindestens einen Phasenleiter (L1, L2, L3) umschließt und mit der Kompensationsschleife (1) verbunden ist, so daß die Freileitung in mindestens zwei Hauptabschnitte unterteilt ist, nämlich in einen Abschnitt mit Kompensationsschleife (1) und in mindestens einen Abschnitt mit Zusatzschleife (2).

2. Freileitung nach Anspruch 1, dadurch gekennzeichnet, daß ein Reihenkondensator (4) in mindestens einer Zusatzschleife (2, 5) angeordnet ist.

3. Freileitung nach Anspruch 1 und/oder 2, dadurch gekennzeichnet, daß bei einem Drehstromsystem mit drei direkt übereinander angeordneten Phasenleitern (L1, L2, L3) ein erster Leiter der Kompensationsschleife (1) über dem oberen Phasenleiter und ein zweiter Leiter der Kompensationsschleife unter dem unteren Phasenleiter angeordnet sind (Fig. 1).

4. Freileitung nach Anspruch 1 und/oder 2, dadurch gekennzeichnet, daß bei einem Drehstromsystem mit drei nebeneinander angeordneten Phasenleitern (L1, L2, L3) ein erster Leiter der Kompensationsschleife (1) neben dem ersten äußeren Phasenleiter und ein zweiter Leiter der Kompensationsschleife neben dem zweiten äußeren Phasenleiter angeordnet sind (Fig. 11).

5. Freileitung nach mindestens einem der Ansprüche 1 bis 4, dadurch gekennzeichnet, daß die Zusatzschleife (2) nur einen Phasenleiter umschließt und der erste Leiter der Zusatzschleife mit dem ersten Leiter der Kompensationsschleife sowie der zweite Leiter der Zusatzschleife mit dem zweiten Leiter der Kompensationsschleife verbunden sind (Fig. 3, 14).

6. Freileitung nach mindestens einem der Ansprüche 1 bis 4, dadurch gekennzeichnet, daß die Zusatzschleife (2, 5) nur einen Phasenleiter umschließt und der erste Leiter der Zusatzschleife mit dem zweiten Leiter der Kompensationsschleife (1) sowie der zweite Leiter der Zusatzschleife mit dem ersten Leiter der Kompensationsschleife verbunden sind (Fig. 5, 12).

7. Freileitung nach mindestens einem der Ansprüche 1 bis 4, dadurch gekennzeichnet, daß die Zusatzschleife (2) zwei Phasenleiter umschließt und der erste Leiter der Zusatzschleife mit dem ersten Leiter der Kompensationsschleife (1) sowie der zweite Leiter der Zusatzschleife mit dem zweiten Leiter der Kompensationsschleife verbunden sind (Fig. 4).

8. Freileitung nach mindestens einem der Ansprüche 1 bis 4, dadurch gekennzeichnet, daß die Zusatzschleife (2) zwei Phasenleiter umschließt und der erste Leiter der Zusatzschleife mit dem zweiten Leiter der Kompensationsschleife (1) sowie der zweite Leiter der Zusatzschleife mit dem ersten Leiter der Kompensationsschleife verbunden sind (Fig. 6).

9. Freileitung nach mindestens einem der Ansprüche 1 bis 4, dadurch gekennzeichnet, daß die Zusatzschleife (2) drei Phasenleiter umschließt und der erste Leiter der Zusatzschleife mit dem zweiten Leiter der Kompensationsschleife (1) sowie der zweite Leiter der Zusatzschleife mit dem ersten Leiter der Kompensationsschleife verbunden sind (Fig. 7).

10. Freileitung nach mindestens einem der Ansprüche 1 bis 4, dadurch gekennzeichnet, daß Zusatzschleifen (2, 5) zu beiden Seiten der Kompensationsschleife (1) angeordnet sind.

11. Freileitung nach Anspruch 10, dadurch gekennzeichnet, daß die beiden Zusatzschleifen je einen unterschiedlichen Leiter umschließen und der erste Leiter der ersten Zusatzschleife (2) mit dem ersten Leiter der Kompensationsschleife(1), der zweite Leiter der ersten Zusatzschleife mit dem zweiten Leiter der Kompensationsschleife, der erste Leiter der zweiten Zusatzschleife (5) mit dem zweiten Leiter der Kompensationsschleife sowie der zweite Leiter der zweiten Zusatzschleife mit dem ersten Leiter der Kompensationsschleife verbunden sind (Fig. 13).

12. Freileitung nach Anspruch 10, dadurch gekennzeichnet, daß die beiden Zusatzschleifen je einen unterschiedlichen Leiter umschließen und der erste Leiter der ersten Zusatzschleife (2) mit dem zweiten Leiter der Kompensationsschleife(1), der zweite Leiter der ersten Zusatzschleife mit dem ersten Leiter der Kompensationsschleife, der erste Leiter der zweiten Zusatzschleife (5) mit dem ersten Leiter der Kompensationsschleife sowie der zweite Leiter der zweiten Zusatzschleife mit dem zweiten Leiter der Kompensationsschleife verbunden sind (Fig. 15).

13. Freileitung nach Anspruch 10, dadurch gekennzeichnet, daß die beiden Zusatzschleifen je zwei Leiter umschließen und der erste Leiter der ersten Zusatzschleife (2) mit dem ersten Leiter der Kompensationsschleife(1), der zweite Leiter der ersten Zusatzschleife mit dem zweiten Leiter der Kompensationsschleife, der erste Leiter der zweiten Zusatzschleife (5) mit dem zweiten Leiter der Kompensationsschleife sowie der zweite Leiter der zweiten Zusatzschleife mit dem ersten Leiter der Kompensationsschleife verbunden sind (Fig. 16).

Fig.1

Fig.2

L3

L2

L1

1

$I_{komp}$

1

L3

L2

L1

$I_{komp}$

Fig.3

2

1

L3

4

L2

L1

L3

L2

L1

$I_{komp}$

3

## Fig.4

## Fig.5

## Fig.6

**Fig.7**

**Fig.8**

Fig.9

Fig.10

Fig.11

Fig.12

Fig.13

Fig.14

Fig.15

Fig.16

# Fig.17